# EUROPEAN PATENT SPECIFICATION

(11) **EP 4 386 315 B1**
(45) Date of publication and mention of the grant of the patent: **02.12.2026**
(21) Application number: 22213118.7
(22) Date of filing: 13.12.2022
(51) Int. Cl.: G01C 15/00

(54) **SURVEYING DEVICE FOR IMPROVED TARGET IDENTIFICATION USING ATR DIFFERENCE IMAGE DATA**
VERMESSUNGSVORRICHTUNG ZUR VERBESSERTEN ZIELIDENTIFIZIERUNG UNTER VERWENDUNG VON ATR-DIFFERENZBILDDATEN
DISPOSITIF D'ARPENTAGE POUR IDENTIFICATION DE CIBLE AMÉLIORÉE À L'AIDE DE DONNÉES D'IMAGE DE DIFFÉRENCE ATR

(43) Date of publication of application: 19.06.2024
(73) Proprietor: Leica Geosystems AG, 9435 Heerbrugg (CH)
(72) Inventor: HORNUNG, Ulrich, CH-9008 St. Gallen (CH); MAYER, Martin, AT-6842 Koblach (AT); SELM, Romedi, 9305 Berg (CH); VARANO, Luca, 9442 Berneck (CH); STIGWALL, Johan, 9008 St. Gallen (CH)
(74) Representative: Kaminski Harmann

(56) References cited:
- MAAR HANNES ET AL: "Leica Nova MS60 White paper", 1 August 2017 (2017-08-01), XP055874203, Retrieved from the Internet <URL:https://leica-geosystems.com/about-us/content-features/leica-nova-ms60-white-paper> [retrieved on 20211217]
- ANONYMOUS: "Image stitching - Wikipedia", 8 July 2022 (2022-07-08), XP093073191, Retrieved from the Internet <URL:https://en.wikipedia.org/w/index.php?title=Image_stitching&oldid=1097090920> [retrieved on 20230811]

## Description

### FIELD OF THE INVENTION

The present invention relates to a geodetic surveying device, in particular total station or theodolite, wherein the geodetic surveying device is configured for surveying retroreflective cooperative targets, in particular reflective tapes, the geodetic surveying device comprising a target recognition emitting unit, called ATR-illuminator, configured to emit a radiation beam, in particular in a beam divergence of 0.5° to 5°, and a target recognition sensor, called ATR-sensor, defining a field-of-view corresponding to the beam divergence, and having a position-sensitive area for receiving radiation of the radiation beam reflected at the retroreflective cooperative targets for generating ATR image data, wherein the received radiation appear as spots in the ATR image data.

### BACKGROUND OF THE INVENTION

A known image processing method is the so-called "image stitching", which is described in the respective Wikipedia article (URL: https://en.wikipedia.org/w/index.php?title=Image_stitching&oldid=1097090920). Prior art ATR (Automated Target Recognition) systems, as for example disclosed in the "Leica Nova MS60 White paper" of Maar Hannes et al. from 2017 (URL: https://leica-geosystems.com/about-us/content-features/leicanova-ms60-white-paper), comprise means for emitting an illumination beam and for detecting at least part of the portion of the illumination beam reflected back from a target. Usually, the illumination is carried out by continuous emission of short illumination beam pulses or illumination beam flashes. The illumination beam is, for example, a divergent laser beam and correspondingly continuous laser pulses are emitted as illumination beam flashes. In this case, the reflected laser light is imaged as a reflection spot (light spot) on an image sensor, e.g. a CMOS- or CCD image sensor (CMOS-2DChip) or non-image sensors like PSD and quadrant detectors. Depending on the deviation of the alignment of the optical aiming axis from the direction to the target object, the position of incidence of the reflected radiation on the ATR sensor also deviates from a central sensor surface position (i.e. the light spot of the ATR illumination beam retroreflected at the target on the ATR surface sensor is not located in the center of the ATR surface sensor and thus does not incide on a nominal position, which was determined, e.g. by means of calibration, as the position corresponding to the optical aiming axis). Thus, within the scope of a fine-targeting/aiming function, the position of the reflective spot or the exposed pixels on the image sensor is used to infer the position of the target relative to the optical aiming axis. In case of a deviation, the alignment of the targeting unit is usually slightly adjusted in a motorised manner by means of the fine-targeting function in such a way that the ATR measuring beam retroreflected by the target hits the center of the sensor surface on the ATR surface sensor with high precision, i.e. the horizontal and vertical angles of the sighting device are iteratively changed and adjusted until the center of the reflective spot coincides with the target position on the ATR surface sensor. In order to ensure the functioning of the automatic fine aiming, it is necessary to align the sighting device at least approximately to the target reflector before the start of the function so that the ATR illumination beam also impinges on the target and is reflected from there onto the ATR area sensor. For this purpose, e.g. a manual aiming of the target reflector based on eye measurement can be carried out beforehand or an automatic coarse aiming function can be executed.

In addition to the ATR fine-target functionality, an automatic target tracking functionality can also be provided in a similar way and using the same ATR components, as it is the case especially with laser trackers, but also modern total stations. In target tracking, the position of the moving target is determined continuously or at very small time intervals. The measurement/surveying device follows the displacement of the geodetic target. After successful ATR fine-targeting, the targeting unit thus continues to track movements of the target "live" and correspondingly quickly in such a way that the center of the ATR reflective spot continues to remain as accurate as possible and always at the target position on the ATR surface sensor. This is often referred to as "locking in" on the target or the target being "locked in".

Problems can arise if the target moves so quickly and abruptly that it disappears from the field of view of the ATR sensor (i.e. the ATR radiation reflected from the target no longer hits the ATR area sensor). Other causes that make it difficult or impossible to detect the target, fine-target it or track it, or that limit the maximum operational range, are due to environmental influences. Such interfering environmental influences are primarily weather influences affecting the optical path, such as rain, fog or heat flicker. Furthermore, extraneous reflections are disturbing, e.g. light that is reflected onto the image sensor in addition to the measuring radiation reflected from the target. Such extraneous reflections are caused by external light or beam sources such as direct or indirect sunlight, i.e. reflected from street signs or glass surfaces, or headlights from construction vehicles. Interference is particularly problematic in target tracking, as it often leads to a loss of lock on the target spot/reflex, which requires time-consuming relocking.

To reduce disturbances caused by weather conditions, state-of-the-art total stations offer the option of setting parameters of the ATR system or the fine-targeting or tracking function by manual configuration by the user depending on the weather conditions. However, this only involves a rough adjustment of the total station to the prevailing weather conditions, so that there is usually no optimal choice of parameters, and this is also associated with additional effort for the user.

To eliminate extraneous reflections or to distinguish between the target's reflection and extraneous reflections, i.e. to distinguish between the reflection spot and other light spots on the sensor, which are caused either by external light sources or by the part of the illumination beam reflected at a non-target, an automatic target recognition system is known from prior art which takes two images with the image sensor while the alignment and position of the surveying device and the target remain the same, wherein no emission of the illumination beam takes place when one of the two images is taken. This means that a reflective spot can only be detected in one of the images, so that the reflective spot can be distinguished from noise or extraneous reflections and the target can be recognised by image processing with the formation of differences between the two images. However, this method is dependent on target angular velocity and framerate between images to be subtracted and thus works best with a static case, i.e. without relative movement of the target or external reflection source to the surveying device.

For determining the reflection center of a retroreflective cooperative target (e.g. tape target), prior art ATR systems can also be used. In this case, however, it is a problem if the retroreflective cooperative target (tape target) is so close to the ATR unit that the target does not fit into the ATR field of view (FOV). In these cases, the ATR signal is too large to be measured (e.g. ATR FOV is fully illuminated) and consequently the reflection center cannot be determined correctly.

In construction, civil engineering and surveying applications it is convenient to use reflective tape targets to define specific positions on a construction site or other places. The tape is easily attached to walls, posts and other object by the adhesive layer on the backside. These targets are typically printed with a structure to indicate the center position for aiming. The structures can be made of a crosses, circles and similar features. The operator can visually aim at these targets to measure their positions with a geodetic surveying device, e.g. total station.

Geodetic surveying devices are equipped with a multitude of optical sensors which particularly work in the visible (VIS) and infrared (IR) spectral range. The structure (e.g. printed ink) on the target is used to allow for a good contrast in the visible spectral range and typically shows absorption relative to the background color of the target. The disadvantage of this absorption is that often also IR signals are absorbed which reduces sensitivity. This is typically the case for black ink.

In other words, prior art targets far away from the surveying instrument may not deliver sufficient contrast. This is especially true for thin-lined structures. Therefore black structures are made thicker to be visible from the distance. However, if larger dark structures are made of conventional black ink, the IR light will be absorbed and the sensors will perform poorly.

### OBJECT OF THE INVENTION

It is therefore an object of the invention to provide a geodetic surveying device, in particular total station or theodolite, for improved identification of retroreflective cooperative targets, in particular reflective tapes.

This object is achieved by realizing at least part of the features of the independent claims. Features which further develop the inventions in an alternative or advantageous manner are described in the dependent patent claims.

### SUMMARY OF THE INVENTION

The present invention relates to a geodetic surveying device, in particular total station, laser tracker, laser scanner or theodolite, wherein the geodetic surveying device is configured for surveying retroreflective cooperative targets, in particular reflective tapes, the geodetic surveying device comprising:
- a base,
- a telescope, wherein the telescope is configured for carrying out a distance measurement by means of a laser beam emitted via a beam exit of the telescope,
- a support, wherein the support is attached to the base so as to be rotatable about a vertical axis of rotation and the telescope is attached to two opposing leg components of the support so as to be rotatable about a horizontal axis of rotation,
- a target recognition emitting unit, called ATR-illuminator, configured to emit a radiation beam, in particular in a beam divergence of 0.5° to 5°,
- a target recognition sensor, called ATR-sensor,
   ∘ having a position-sensitive area for receiving radiation of the radiation beam reflected at the retroreflective cooperative targets, in particular in a beam divergence of 0.5° to 5°, for generating ATR image data, wherein the received radiation appear as spots in the ATR image data which allows also angle measurements, wherein an ATR field-of-view is generated by the interaction of ATR-illuminator and ATR-sensor ( wherein e.g. the beam divergences can be the same and in this case the position-sensitive area is completely covered by radiation, but it is also possible that e.g. the beam divergences are different and thus e.g. only a part of the position-sensitive area is covered by radiation, which leads e.g. to black/unilluminated edges in the ATR images),
- at least one angle encoder, in particular one angle encoder per axis, wherein the at least one angle encoder is configured to determine orientations of the telescope and/or the support and/or the ATR-illuminator relative to the base, and
- a processing unit configured to determine angular data depending on spot positions in the image data.

The geodetic surveying device is configured to
- generate a series of ATR image data with continuously changing orientation of the ATR-illuminator and/or the ATR-sensor, in particular changing orientation of the ATR-illuminator at every image or at least at every second image of the series of ATR image data (but also two (double images), three (triple images), or a plurality of ATR image data can be taken at one orientation of the ATR-illuminator and/or the ATR-sensor to generate the series of ATR image data, which means that the generation of the series of ATR image data is not only limited to taking exactly one ATR image at one position of the ATR-illuminator and/or the ATR-sensor), wherein image data of the series of ATR image data are generated with different ATR illumination, in particular with alternating ATR illumination on and off,
- generate difference image data and perform spatial stitching (e.g. wherein the image data of the series of ATR image data generated with different ATR illumination, in particular with alternating ATR illumination on and off, have different orientation and this orientation is taken into account for the spatial stitching) of the difference image data such that panoramic difference image data are generated, and
- determine the position of the spots, especially the centroid of the area, in the panoramic difference image data.

By matching the signals/spots from the "laser off" image to the signals/spots from the "laser on" image (using location and, for more robustness, also size information) it's possible to identify which signals are strong background (foreign light) and which signals are reflections of the own laser. This works by the assumption that the signal location didn't change significantly between the two snapshots, or if the location change is known and compensated.

This invention has the advantage over prior art systems that interferences can be removed from the image, and thus (pixel-wise) difference images (static or moving) give more accurate location measurements, since the interfering source is compensated (per pixel). So, the invention combines the benefits of (pixel-wise) difference images with being able to compensate camera movements (e.g. by TPS rotation).

In other words, this invention improves the automatic identification (e.g. during search movement), aiming and potentially also lock of a Total Station or similar instruments to retroreflective targets like prisms and reflective tapes.

The panoramic stitching (spatial stitching of the difference image data to panoramic difference image data) allows to do arbitrary movements of the total station and/or the ATR unit and still make maximum use of all taken images. For example, the movement is a spiral one and then even after one round of the spiral the old data from the beginning of the more inner round is overlapping and automatically taken into account when doing the spot evaluation on the current region of interest in the panoramic image (panoramic difference image data).

The device can work with alternating ATR illumination on/off image data (series of ATR image data with different ATR illumination) as described above. But it can also work with constantly doing "ATR illumination on" image data when the ATR image data are only partially illuminated and the ATR-illuminator (and/or ATR-sensor) is always moving as in search usecases. When the ATR-illuminator (and/or ATR-sensor) is moved the previously illuminated part/area of the ATR image data (received radiation appears as spots) will move into the not illuminated part/area. Based on the consideration of the areas of illumination and areas of not illumination, difference image data are generated. Alternating illumination area patterns would also be possible if they can be switched fast enough (frame by frame).

In a further embodiment,
- the geodetic surveying device process the image data of the series of ATR image data generated with different ATR illumination in such a way that the difference image data are generated based on pixel data as pixel level difference image data,
- multiple of the pixel level difference image data are accumulated (or averaged) to provide accumulated difference image data with an improved signal to noise ratio, and
- spatial stitching of the accumulated difference image data to the panoramic difference image data is performed.

In other words, techniques like feature matching, pixel warping, etc. are used to obtain pixel-accurate (ATR) difference images during motion of camera (telescope) and/or ATR unit (e.g. by rotation of support about the vertical axis of rotation and rotation of the telescope about the horizontal axis of rotation), i.e., during target aiming (target search movement, e.g. spiral search). This way the exact translation between two (ATR) images during movement can also be derived from the corresponding measured angles and the known (calibrated) position, rotation and Field of View of the camera (telescope)/ATR unit in relation to the axes.

This embodiment has the advantage that background signals are removed pixel by pixel such that even very weak (target) signals can be easily detected. Furthermore, the ATR illuminator/ATR sensor can be moved and still very accurate ATR pixel level difference images can be obtained.

This embodiment is especially useful when the signal (ATR radiation) that is reflected by the target is very low. This can happen in case of high distances, bad weather conditions and/or bad target conditions (for example, if the target is dirty). Reflective tapes feature return signals (ATR radiation) that are several orders of magnitude lower than those of geodetic prisms, but they are cheap, lightweight and/or flexible, and can be permanently attached (e.g. glued) to objects or structures.

If the target is moving, enough signals are needed that it can be detected and localized in single images without "accumulation". Possible use cases are, for example, static tapes (weak signal) and moving prisms (strong signals).

This invention allows, if needed, to transform one or both of the (ATR) images in a way such that corresponding image pixel data can be subtracted and the resulting image (pixel level difference image data) contains the signal difference of the scene on a high resolution. With the help of the differential images on pixel level (pixel level difference image data) background signals (from white walls of buildings and other brighter surfaces for example) can be removed pixel by pixel such that even a very weak prism (ATR) signal can still be easily detected. It is further allowed to accumulate multiple of those differential images (pixel level difference image data) to improve the signal to noise ratio and detect robustly otherwise too weak signals:

Compared to prior art systems, in which (ATR) signal needs to be significantly stronger than large area background signals, this allows to detect much weaker signals (i.e. much higher distances of prism targets, or during very bad weather) in general. For example, in a situation where the weak (ATR) signal is located between two large and strong background signals, prior art approaches would have problems with the thresholding (limit/threshold above which ATR signals are identified as targets) as the threshold is automatically set such that these large strong background signals are below it. However, the example works with pixel level differential image data.

In a further embodiment, for the generation of the series of ATR image data, the orientation of the ATR-illuminator is changed by rotating the support around the vertical axis of rotation and/or around the horizontal axis of rotation, in particular wherein individual image data of the series of ATR image data are generated at least every 1°, more particularly at least every 0.5°.

This embodiment has the advantage that a large amount of ATR image data is generated and therefore enough ATR image data are available to generate a sufficient quantity of ATR difference image data. Consequently, numerous ATR difference image data with a large overlap can be spatial stitched to panoramic difference image data, generating panoramic difference image data with a high resolution and an accurate spot detection (spots have a high intensity and a sharp transition to non-illuminated ATR image data).

In a further embodiment, the generation of the image data of the series of ATR image data with different ATR illumination, in particular with alternating ATR illumination on and off, results in image data with a plurality of spots (spots from targets and spots from interfering signals), called bright image data, when the ATR illumination is on, and in image data with a small number of spots (spots only from interfering signals), called dark image data, when the ATR illumination is off, wherein the geodetic surveying device is configured to
- perform spatial stitching of the bright image data to bright panoramic image data and spatial stitching of the dark image data to dark panoramic image data,
- generate panoramic difference image data using the bright panoramic image data and the dark panoramic image data,
- determine the position of the spots, especially the centroid of the area, in the panoramic difference image data.

This embodiment has the advantage that the ATR-illuminator/ATR-sensor can be moved continuously, e.g. in target search usecases, and thus a plurality of targets can be identified simultaneously and distinguished from a plurality of interfering signals. In this way, the generation of the (panoramic) difference image data takes place after the generation of the (bright and dark) panoramic image data. The computationally intensive task is to generate the bright and dark panorama images since it involves resampling the images. The difference panorama image is then easy to calculate as only one subtraction operation per pixel is needed.

In this way the stitching and/or accumulation of the ATR signals can be done over a larger time period without the need to store all intermediate results. This helps to keep the amount of required memory for executing the accumulating algorithm on a constant level. It doesn't depend on the number of ATR images taken in total, it only depends on the angular space that needs to be covered and the resolution that needs to be supported to achieve the required accuracy.

In a further embodiment, the geodetic surveying device is configured to firstly generate the difference image data using the image data of the series of ATR image data generated with different ATR illumination, and secondly perform the spatial stitching of the difference image data to the panoramic difference image data.

In summary (but not limiting/but not exclusively), the previous embodiments of the invention have at least the following features compared to the prior art:
- accumulating the difference images (pixel level difference image data) to improve the signal to background/noise ratio (by removing static background signals),
- accumulating the difference images (pixel level difference image data) to improve the signal to noise ratio even though there is a larger movement between the different snapshot positions (series of ATR image data with continuously changing orientation of the ATR-illuminator and/or the ATR-sensor), e.g. much more than a single pixel,
- a faster scan motion since the individual ATR images are allowed to be noisy (motion blur can be avoided by using a short exposure time, and the increase in noise (from underexposed images) can be compensated by accumulated averaging),
- stitching and/or accumulating the difference images (pixel level difference image data) into a panorama-like picture (panoramic difference image data) such that the stitching and/or accumulation of the ATR signals can be done over a larger time period without the need to store all intermediate results (This helps to keep the amount of required memory for executing the accumulating algorithm on a constant level. It doesn't depend on the number of ATR images taken in total, it only depends on the angular space that needs to be covered and the resolution that needs to be supported to achieve the required accuracy).

Further embodiments not falling within the scope of the invention invention comprise:
- subsampling, binning and/or cropped readout (ROI) to speedup ATR-sensor readout and thus improve the framerate (This improves the quality of the difference image data in unstable weather (heat haze) since the atmosphere stays nearly identical from one frame to the next when the framerate is high (e.g. > 500 Hz). However, it is not necessary to use a high average framerate - it is only important that the image data of the series of ATR image data with different ATR illumination (ATR-illuminator on/off) are acquired in very quick succession. Subsampling and/or binning (in sensor itself, or afterwards in the pre-processing step e.g. in FPGA or SW or ISP) can be used to speedup the computations at cost of accuracy. This is because 1. Less data needs to be processed, and 2. Because the warping step can be omitted if the optical distortions and perspective change are small enough such that they are not relevant and thus algorithmic can work with integer based x,y offsets. This prevents that interpolation between pixels needs to be done. Less noise reduction filtering may need to be done since the binning itself provides low pass filtering), and/or
- a Time-of-Flight sensor as a form of lock-in amplifier to detect a high frequency modulated laser signal. (TOF image sensors provide multiple (e.g. two or three) "taps" (storage nodes) per pixel, and can switch between these repetitively at a high frequency (several MHz) during integration. Effectively, each pair of "ATR-illuminator on" and "ATR-illuminator off" images would then be acquired overlapping during the same exposure. Thus, it is possible to get nearly perfect difference image data even during scanning motion, strong wind (moving branches), moving objects (persons, vehicles) or strong heat haze.),
- a usage of the device for target tracking (Lock) to improve the range in case of a weak signal.

In a further embodiment of the geodetic surveying device according to the invention and a retroreflective tape target, the retroreflective tape target to be surveyed by the geodetic surveying device, the retroreflective tape target comprising an area where impinging light of a first wavelength range is retroreflected, and an element arranged within the retroreflective area, wherein the element is transmissive to radiation of the first wavelength range, and is opaque to radiation of a second wavelength range, wherein the second wavelength range is at least partly in a visible wavelength range.

This embodiment has the advantage over prior art systems that the target contrast in the second wavelength range (visible wavelength range) is enhanced whilst the signal sensitivity for impinging light of the first wavelength range (e.g. IR) is maintained.

In other words, this embodiment utilize a special ink, which shows absorption in the visible range whilst being transparent in the IR. This allows both, a good contrast for visual aiming and a good signal strength for IR sensors.

In a further embodiment, the first wavelength range is in the non-visible wavelength range.

In a further embodiment, the first wavelength range is in the wavelength range greater than 700 nm, in particular in the infrared wavelength range.

Common geodetic surveying devices are equipped with sensors which emit radiation in the non-visible wavelength range (especially in the IR range, e.g. in an ATR unit) and detect the radiation retroreflected from a target. Consequently, it is advantageous that the target can retroreflect impinging light in the non-visible wavelength range (especially in the IR range) with the full retroreflective area.

In a further embodiment, the first wavelength range is in the wavelength range smaller than 400 nm, in particular in the UV wavelength range.

This embodiment has the advantage that devices which emit and receive radiation in the wavelength range smaller than 400 nm, in particular in the UV wavelength range, can also work with the target according to thisembodiment.

In a further embodiment, the element is configured as a pattern, in particular as a pattern for being targeted with an optical targeting unit, wherein the pattern subdivides the retroreflective area into sectors.

In a further embodiment, the pattern comprises a horizontal line, a vertical line and at least one circle, wherein the horizontal and the vertical line intersect in the center of the retroreflective area, in particular wherein the pattern is formed as reticle/crosshair.

In a further embodiment, the lines forming the pattern have a thickness in a range of 0.1 mm and 5 mm, in particular a thickness below 2 mm, more in particular a thickness below 1 mm.

In a further embodiment, the element covers an area between 0.5 % and 10 % of the retroreflective area.

In other words, the retroreflective foil (retroreflective area) is printed with the target structure (element). This covers part of the retroreflective structure and absorbs light of specific wavelengths, e.g. visible wavelengths.

In a further embodiment, the sectors formed by the pattern alternately comprise the element and no element.

In a further embodiment, the element covers an area between 30 % and 60 % of the retroreflective area, in particular an area of 50 % of the retroreflective area.

The embodiments listed above have the advantage that the element or the configuration of the element on the retroreflective area can be customised according to the needs of the user or that there are different options for the user to choose from.

In a further embodiment, the element is applied to the retroreflective area, in particular printed on.

This embodiment has the advantage that the element can be applied to the targets by machine (e.g. using a large-scale industrial printer). Consequently, the tape targets according to the embodiments can be manufactured quickly, easily, cheaply and on a large scale.

In a further embodiment, the retroreflective area comprises micro-prismatic reflectors as micro-beads and/or corner cube arrays.

This embodiment has the advantage that due to the structure of the retroreflective area a large amount of the incoming radiation is retroreflected.

The highly reflective tapes are based on retroreflective optical structures. Most common are distributed micro-beads or corner cube arrays (also known as micro-prismatic reflectors). Typically the corner cube arrays shows higher retro-reflectivity (i.e. the light is retroreflected with a smaller divergence) than the distributed micro-beads.

Further embodiments comprise:
- an IR transparent ink of different visible appearance than black (This allow to hide targets by using an IR transparent color/structures that matches the background. This allow for higher customer acceptance to use tape targets in the environment e.g. house walls. Such hided targets could be difficult to be found visually (manual and by computer vision) but the IR sensors is able to find them due to the high reflectivity.),
- information coded in the tape which could not be seen by people but by an IR sensor,
- target identifier information coded in / printed on the tape which can be seen in the visual domain (e.g. by numbers or letters visible to the human operator, or barcode or ARTag or OR-code pattern visible and decodable by visual camera), because it is IR-transparent the identifier information does not hamper aiming accuracy with IR-sensors based on e.g. center of gravity computation,
- structures being transparent to light of any wavelength range, e.g. UV, etc.

In summary (but not limiting/but not exclusively), the previous embodiments have at least the following advantages over the prior art:
- better contrast/visibility for computer vision systems in visible spectral range,
- maintained (high) reflectivity (by large reflective area) for IR-sensors, the sensitivity being independent of the pattern in visual domain.
- the two wavelengths could both be in the visible (e.g. green for visual aiming and red for sensors, e.g. electronic distance measurement sensor detection). Spectraly sensitive sensors (e.g. by using bandpass filters) could distinguish the two colors on the reflective target.

In a further embodiment of a geodetic surveying device not falling within the scope of the invention, in particular total station or theodolite, the geodetic surveying device is configured for surveying retroreflective cooperative targets, in particular reflective tapes, the geodetic surveying device comprising:
- a base,
- a telescope, wherein the telescope is configured for carrying out a distance measurement by means of a laser beam emitted via a beam exit of the telescope,
- a support, wherein the support is attached to the base so as to be rotatable about a vertical axis of rotation and the telescope is attached to two opposing leg components of the support so as to be rotatable about a horizontal axis of rotation,
- a target recognition emitting unit, called ATR-illuminator, configured to emit a radiation beam, in particular in a beam divergence of 0.5° to 5°,
- a target recognition sensor, called ATR-sensor,
   ∘ defining a field-of-view corresponding to the beam divergence, called ATR-FOV, wherein the ATR-FOV is generated by the interaction of ATR-illuminator and ATR-sensor (wherein e.g. the beam divergences can be the same and in this case the position-sensitive area is completely covered by radiation, but it is also possible that e.g. the beam divergences are different and thus e.g. only a part of the position-sensitive area is covered by radiation, which leads e.g. to black/unilluminated edges in the ATR images), and
   ∘ having a position-sensitive area for receiving radiation of the radiation beam reflected at the retroreflective cooperative targets for generating ATR image data, in particular in a beam divergence of 0.5° to 5°, wherein the received radiation appear as spots in the ATR image data which allows also angle measurements,
- at least one angle encoder, in particular one angle encoder per axis, wherein the at least one angle encoder is configured to determine orientations of the telescope and/or the support and/or the ATR-illuminator relative to the base, and
- a processing unit configured to determine angular data depending on spot positions in the image data.

The geodetic surveying device is configured for performing a retroreflecting target measurement mode in which the retroreflective cooperative target does not fit into the ATR-FOV, in which a series of ATR image data is generated, wherein with each of the ATR image data of the series of ATR image data a spatial analysis of illumination patterns is carried out, wherein based on the spatial analysis of illumination patterns and taken different orientations of the ATR-illuminator, i.e. angles determined by the at least one angle encoder in each of the different orientations of the ATR-illuminator, a reflection center of the retroreflective cooperative target is determined.

This embodiment has the advantage over prior art systems that the user has an increased flexibility for the measurement of the (tape) targets (e.g. on the construction site), as the user can also measure retroreflective cooperative targets which does not fit into the ATR-FOV. The user is therefore not restricted in the selection of his location or the selection of targets from his location, which makes it easier to measure all targets (on a construction site) and also saves time.

In other words, when the retroreflective cooperative target (tape target) is very close to the telescope/ATR-illuminator, it doesn't fit into the ATR-Field of View (FOV). The situation of when the (ATR) signal is too large to be measured can be automatically detected as in this case the ATR-FOV is fully illuminated (initially or after an initial measurement plus adjustment). In such a case, the motors (motorized rotation of the support about the vertical axis of rotation and of the telescope about the horizontal axis of rotation) of the geodetic surveying device (totalstation) can be used to do capture with the ATR-illuminator/ATR-sensor combination different locations around the aiming point. Stitching the snapshots (series of ATR image data) together, one can use the resulting larger image to precisely compute (spatial analysis of illumination patterns and taken different orientations of the ATR-illuminator) the (reflection) center of the retroreflective cooperative target (tape) just with the traditional center of gravity approach.

In a further embodiment, the geodetic surveying device is configured to generate image data of the series of ATR image data with different ATR illumination, in particular with alternating ATR illumination on and off, and generate difference image data using the image data of the series of ATR image data generated with different ATR illumination, wherein the spatial analysis of illumination patterns is carried out with the difference image data.

This embodiment has the advantage that possible interfering signals that could affect the performance of the retroreflecting target measurement mode are removed by generating difference image data. This allows the spatial analysis of illumination patterns to be performed more accurately and thus the determination of the reflection centre of the retroreflective cooperative target to be improved.

In a further embodiment, the retroreflecting target measurement mode is performed for retroreflective cooperative targets located within a defined threshold distance, in particular wherein the defined threshold distance is within a range of 0.5 m to 25 m, in particular 1.5 m to 15 m, from the ATR-illuminator. The distance at which the target fits into the ATR FOV depends on the size of the target, the diameter of the telescope (unless the ATR has "auto-focus") and the ATR FOV. As an example, with a 60 x 60 mm tape target and a TPS with 50 mm telescope diameter, the total diameter of the extremely blurry spot seen by the ATR camera (focused at infinity) in the near range is 60 * sqrt(2) + 50 = 135 mm. With a 5 degree ATR camera FOV, this is reached at 135 mm / 2 / tand(2.5 deg) = 1.5 m, with 1.5 degree ATR FOV at 5.2 m and with 0.5 degree ATR FOV at 15 m.

This embodiment has the advantage that the user has a higher flexibility for the measurement of the (tape) targets (e.g. on the construction site). The user can measure targets outside the threshold distance with a "different" retroreflecting target measurement mode and use the retroreflecting target measurement mode for targets within the threshold distance. The user is therefore not restricted in the selection of his location or the selection of targets from his location, which makes it easier to measure all targets (on a construction site) and also saves time.

In a further embodiment, ATR image data of the series of ATR image data is generated until the retroreflecting target measurement mode determines at least a part of a first expansion limit of the retroreflective cooperative target, in particular a first edge of a reflective tape, by means of the spatial analysis of illumination patterns, called first spatial analysis.

In a further embodiment, based on the determination of at least a part of the first expansion limit of the retroreflective cooperative target, in particular the first edge of the reflective tape, by means of the first spatial analysis and the corresponding orientation of the ATR-illuminator, further ATR image data of the series of ATR image data is generated, wherein for generating the further ATR image data of the series of ATR image data the orientation of the ATR-illuminator is altered according to a recording pattern, in particular wherein
- the further ATR image data of the series of ATR image data are generated until the retroreflective target measuring mode determines at least a part of at least a second expansion limit of the retroreflective cooperative target, in particular at least a second edge of a reflective tape, by means of a second spatial analysis, and
- based on the first spatial analysis and second spatial analysis and taken different orientations of the ATR-illuminator, the reflection center of the reflective target is determined.

In a further embodiment, the recording pattern corresponds to a traversal of expansion limits in a certain direction starting from the determined at least a part of the first expansion limit of the retroreflective cooperative target, in particular the first edge of the reflective tape, to a re-arrival of the determined at least a part of the first expansion limit of the retroreflective cooperative target, in particular the first edge of the reflective tape, or an array of adjacent or overlapping ATR image data, wherein the array of adjacent or overlapping ATR image data forms a row, a matrix, in particular a 3x3 matrix, or a cross.

In a further embodiment, the geodetic surveying device is configured to determine at least the second expansion limit based on the known expansion of the retroreflective cooperative target, in particular based on the known expansion of the reflective tape, wherein the ATR-illuminator is oriented such that at least the second expansion limit is directly captured by the further ATR-image data of the series of ATR-image data.

Some snapshots (ATR image data of the series of ATR image data) might even be omittable when the center of the retroreflective cooperative target (tape) is calculated by detecting the expansion limit by using the information from borders of the (ATR) signal instead of the gravity.

In a further embodiment, if the retroreflecting target measurement mode determines only a part of an expansion limit, in particular of the first and/or second expansion limit, by means of the spatial analysis of illumination patterns, the complete expansion as well as the orientation in space of the expansion limit is determined based on the known expansion of the retroreflective cooperative target, in particular from the known expansion of the reflective tape.

These embodiments have the advantage that if only part of a target's expansion limit has been determined, further expansion limits can still be determined and spatial analysis can be performed to determine the reflection center. In the case that only a part of a target's expansion limit was determined, the measurment mode can still be executed and the user does not have to reconfigure the device. This offers the user increased flexibility in determining the reflection center of the reflective target.

In a further embodiment, the geodetic surveying device is configured to perform spatial stitching of the difference image data to panoramic difference image data. The panoramic difference image data are used to detect very large target signals as described above for the usecase of measuring a target at close distances where the tape signal is larger than the ATR-FoV.

### BRIEF DESCRIPTION OF THE DRAWINGS

The inventions are illustrated in more detail below, purely by way of example, with reference to working examples shown schematically in the drawing. Identical elements are labelled with the same reference numerals in the figures. The described embodiments are generally not shown true to scale and they are also not to be interpreted as limiting the invention.
Figure 1 shows a schematic illustration of the generation of an ATR difference image and the corresponding target identification according to prior art.
Figure 2 shows a schematic illustration of the generation of ATR panoramic difference image data and the corresponding spot extraction according to the present invention.
Figure 3 shows a schematic illustration of the generation of ATR pixel level difference image data according to the present invention.
Figure 4 shows a schematic illustration of the accumulation of multiple of ATR pixel level difference image data to improve the signal to noise ratio according to the present invention.
Figure 5 shows a schematic illustration of the cross section of a retroreflective tape target according to prior art.
Figure 6 shows two example of retroreflective tape targets having the element configured as different patterns.
Figure 7 shows a transmission spectrum of the element attached to the retroreflective tape target and being transmissive to IR radiation.
Figure 8 shows a situation in which the ATR-FOV is smaller than a retroreflective tape target.
Figure 9 shows a schematic illustration of the generation of a series of ATR image data and the determination of the reflection center of the retroreflective tape target.
Figure 10 shows a schematic illustration of the generation of further ATR image data of the series of ATR image data with an altered orientation of the ATR-illuminator according to a 3x3 matrix recording pattern.
Figure 11 shows a schematic illustration of the generation of further ATR image data of the series of ATR image data according to a recording pattern, wherein parts of the recording pattern have been omitted since the complete target has already been recorded.
Figure 12 shows a schematic illustration of the generation of further ATR image data of the series of ATR image data, wherein the recording pattern corresponds to a traversal of expansion limits in a certain direction.
Figure 13 shows a schematic illustration of the generation of further ATR image data of the series of ATR images, wherein all expansion limits of a reflective tape can already be determined after the capturing of three ATR images.
Figure 14 shows a schematic illustration of the generation of further ATR image data of the series of ATR images, wherein based on a detected corner and the known geometry of the tape target, a further corner can be determined.
Figure 15 shows a schematic illustration of the generation of further ATR image data of the series of ATR images, wherein an additional ATR image is taken to improve the quality of the determination of the reflection center.

### DETAILED DESCRIPTION OF THE DRAWINGS

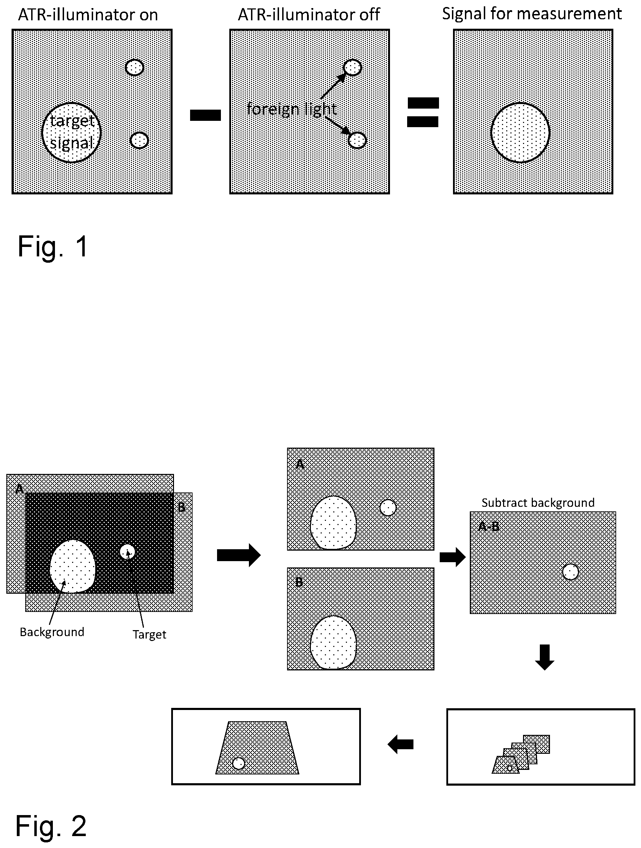

**Figure 1** shows a schematic illustration of of the generation of an ATR difference image and the corresponding target identification according to the state of the art. By means of the ATR unit, an ATR image of the environment is taken in which the retroreflective target, in this example a retroreflective prism, is assumed to be located, wherein the ATR illumination (laser) is first switched on. In this way, the target (prism) should be illuminated by means of the radiation of the ATR unit, the retroreflected radiation should be detected by the ATR sensor and thus the target should be identified and located for the distance measurement by means of the telescope. In this case, radiation (e.g. sunlight, car headlights, etc.) can be reflected from other objects/structures, such as white walls, windows, etc. and also be detected by the ATR sensor. In this way, it is not clear which of the reflecting objects or which of the detected signals (spots) is the target. If a second ATR image is taken in which the ATR illumination is switched off, only the signals generated by other radiation sources are detected by the ATR sensor. By subtracting the ATR image with ATR illumination switched off from the ATR image with ATR illumination switched on, a difference image can be generated which shows only the target signal.

However, a significant disadvantage of this prior art method is that the objects generating the ATR signal are not allowed to change significantly in order to be able to generate a sufficiently accurate difference image. Continuous movement of the target, which is not uncommon or even necessary for surveying for example on construction sites, is not possible with this prior art method. Furthermore, moving car headlights can also make it difficult to generate difference images. The movement of the ATR unit, for example when searching for targets, is also disadvantageous for the generation of differential images, as the position of the signals/spots in the ATR image is shifted. In this way, the target identification process is very time-consuming in prior art systems.

**Figure 2** shows a schematic illustration of the generation of ATR panoramic difference image data and the corresponding spot extraction according to the present invention comprising the following steps:
1. The target recognition emitting unit, called ATR-illuminator, emits a radiation beam in a beam divergence of typically 0.5° to 5° (the angle range results from different possible measurement modes such as: small-angle vs wide-angle, FOV according to OVC, Panocam, etc.). This radiation beam hits the retroreflective target (in this example a tape target), is retroreflected and detected by the target recognition sensor, called ATR-sensor, in the position-sensitive area. Subsequently, ATR image data are generated, wherein the received (retroreflected) radiation of the tape target appear as a spot in the ATR image data (image A). In this example, a house is illuminated by the sun and the radiation reflected from the house wall was also detected by the ATR sensor as background radiation. Consequently, it is not immediately clear which detected radiation is the target.
2. In the next step, the ATR illuminator/ATR sensor is moved and ATR image data (image B) is also generated at this position, while the ATR illuminator is switched off. The signal of the illuminated house is also present as a spot in this ATR image data. However, the spot of the tape target is missing.
3. During the generation of the image data (image A and B), the at least one angle encoder (e.g. one angle encoder for the vertical axis of rotation and one angle encoder for the horizontal axis of rotation) determines the orientations of the telescope, the support and the ATR-illuminator relative to the base and the processing unit determines angular data depending on the spot positions in the ATR image data.
4. The geodetic surveying device generates a series of ATR image data (in this example image A and B) with continuously changing orientation of the ATR-illuminator/ATR-sensor and with different ATR illumination (in this example ATR illumination on and off).
5. Then, difference image data (image A-B) is generated using the images A and B.
6. To be able to move the target to desired positions or to search for further targets (e.g. spiral search), steps 1 to 5 are repeated.
7. In the next step, a spatial stitching of the difference image data (depending on how many times steps 1 to 5 were repeated, a different number of difference image data is available) to panoramic difference image data is performed.
8. The position of the spot in the panoramic difference image data is determined.

In this way, the geodetic surveying device according to the present invention allows the ATR illuminator or ATR sensor to move and still obtain very accurate ATR difference images.

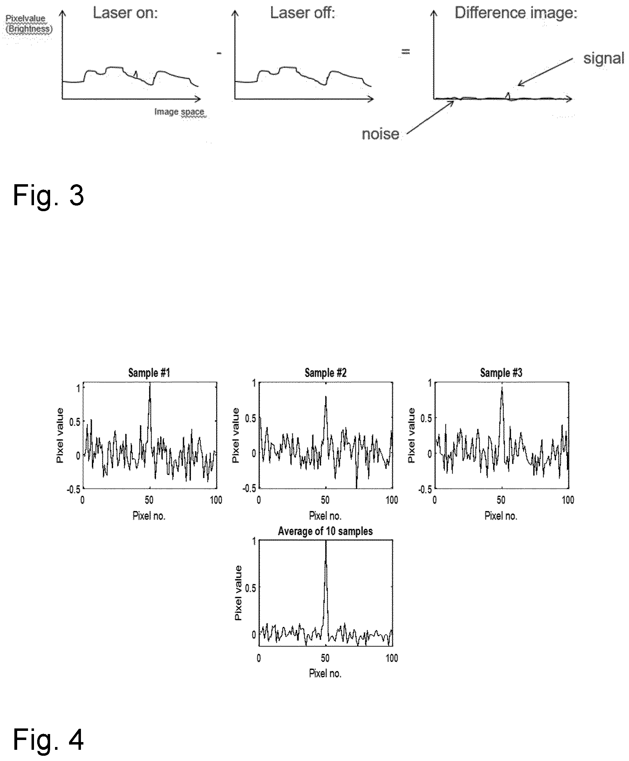

**Figure** 3 shows a schematic illustration of the generation of ATR pixel level difference image data according to the present invention. The geodetic surveying device process the image data of the series of ATR image data generated with different ATR illumination in such a way that the difference image data are generated based on pixel data as pixel level difference image data.

In some prior art systems, signals with an intensity above a thresholding (pixel) value are identified as targets and signals with an intensity below the thresholding (pixel) value are identified as noise and removed from the difference image. Accordingly, for a large and strong background signal area, the threshold would automatically be set such that the large strong background signal area are below it. Consequently, the weak (target) signal located between the large and strong background signal area would also fall below the threshold and thus be removed in the difference image.

In the advantageous embodiment of the invention shown in **Figure 3****,** background signals are removed pixel by pixel such that even the very weak (target) signal can still be easily detected.

Furthermore, generating the panoramic difference image data allows to move the targets and/or the ATR illuminator or ATR sensor and still obtain very accurate ATR difference images, which in turn are based on pixel data received as pixel level difference image data, in order to remove background signals and detect very weak (target) signals.

**Figure 4** shows a schematic illustration of the accumulation of multiple of ATR pixel level difference image data to improve the signal to noise ratio according to the present invention. In this application the word "accumulation" has to be understood as an averaging operation. The number of samples may vary from one pixel (of the pixel level difference image data) to the next, so if one only accumulates the pixel level difference image data without dividing by the number of samples there may be discontinuous steps in the accumulated difference image data that do not exist in the real scene.

Under normal conditions (sufficient light, no rain or fog, etc.), the signal detected by a prism is intense and large enough to be identified as a target in the difference image compared to the interfering signals. However, bad weather conditions (fog, darkness, raindrops on the prism surface, etc.) can reduce the intensity of the signal and thus make identification more difficult. In addition, target tapes provide much weaker/less intense ATR signals (spots) with a less sharp transition from spot to unilluminated area of the ATR image, which makes identification as a target much more difficult.

In the advantageous embodiment of the invention shown in **Figure 4****,** multiple of the pixel level difference image data are accumulated to provide accumulated difference image data with an improved signal to noise ratio. This way, even in bad weather conditions, with many interfering signals or a large distance to the target, the target can be clearly identified as a target.

This embodiment also has the advantage that, if desired by the user, panoramic difference image data based on pixel data can be accumulated and thus the targets and/or the ATR illuminator/ATR sensor can be moved and targets can still be identified time-efficiently and precisely. Under difficult weather conditions and/or long distances to targets resulting in weak signals, targets can still be identified, but on the one hand only for known movements, i.e. of the total station ATR unit, or on the other hand if the target is moving slowly. In this case, knowledge about the target motion (e.g. max acceleration) can be used to still enable tracking in situations where single-frame detection would fail.

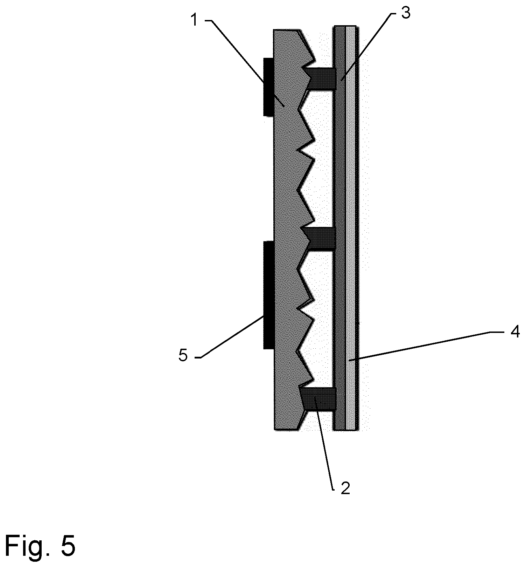

**Figure 5** shows a schematic illustration of the cross section of a retroreflective tape target according to prior art. The tape target has a retroreflective area 1 (with a retroreflective micro-prismatic structure). Furthermore, the tape target has a supporting structure 2 to generate an air-gap for total internal reflection, a substrate 3 on which the supporting structure 2 is attached and an adhesive layer 4 which enables the tape target to be adhered/glued to, for example, a house wall. On the retroreflective area 1 an element 5 is attached (e.g. printed target structure with ink), which however covers parts of the retroreflective area 1 and absorbs light of specific wavelengths. Alternatively the micro-prism surfaces could be coated by reflective material - in this case no total internal reflection occurs and no supporting structure is necessary.

A significant disadvantage of a tape target according to the prior art is that if the element 5 covers a significant part of the retroreflective area 1 in order to increase the contrast for optical targeting by means of e.g. a telecope, a large proportion of e.g. the IR radiation of an ATR unit is absorbed at the same time, which in turn leads to a weakened ATR signal and thus makes identification of the target more difficult. However, if the element 5 is designed in such a way that only a small amount of the retroreflective area 5 is covered (for example, in the case of the element 5 as a crosshair with thin lines), the retroreflection of, for example, IR radiation is increased, but the optical aiming by means of an aiming unit is considerably more difficult.

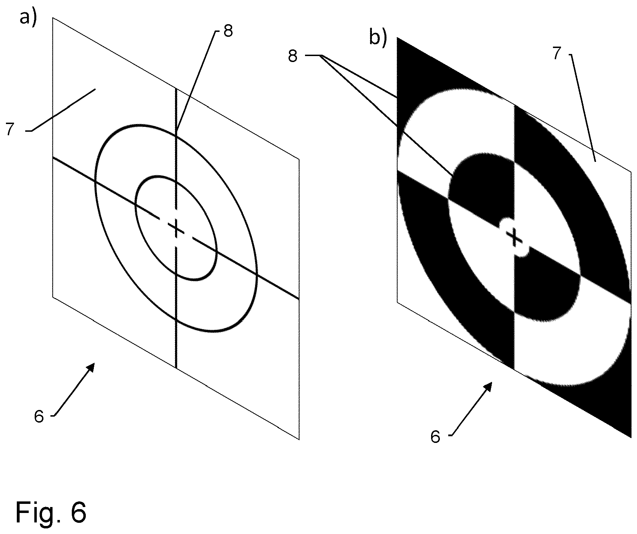

**Figure 6** shows two example of the retroreflective tape target 6 having the element configured as different patterns. The retroreflective tape target 6 comprises an area 7 where impinging light of a first wavelength range is retroreflected, and an element 8 arranged within the retroreflective area, wherein the element 8 is transmissive to radiation of the first wavelength range (e.g. IR radiation), and is opaque to radiation of a second wavelength range, wherein the second wavelength range is at least partly in a visible wavelength range (the element is visible with the eye and can be targeted in this way).

Thus, the disadvantages of the prior art are eliminated, since the element 8 can be arranged on a sufficiently large area of the retroreflective area 7 and thus the contrast for optical targeting is very good and, in addition, the transmissivity/reflectivity of the retroreflective area 7 for radiation of a further (non-visible) wavelength (e.g. IR radiation) is preserved.

In both examples a) and b) shown, the element 8 is configured as a pattern, which subdivides the retroreflective area 7 into sectors.

In example a), the pattern has a horizontal line, a vertical line and two circles, the horizontal and vertical lines intersecting at the center of the retroreflective area 7. The two circles are arranged concentrically around the center of the retroreflective area 7 to form a reticle/crosshair.

In example b) the pattern also has a horizontal line, a vertical line and two circles, the horizontal and vertical lines intersecting at the center of the retroreflective area 7. The two circles are arranged concentrically around the center of the retroreflective area 7 to form a reticle/crosshair. The sectors formed by these lines are alternately covered by element 8. Depending on how well the pattern needs to be visually targetable, the line thickness and thus the area covered by the element 8 can be varied. Any conceivable line thickness and corresponding covering area can be selected without being restricted by the claims.

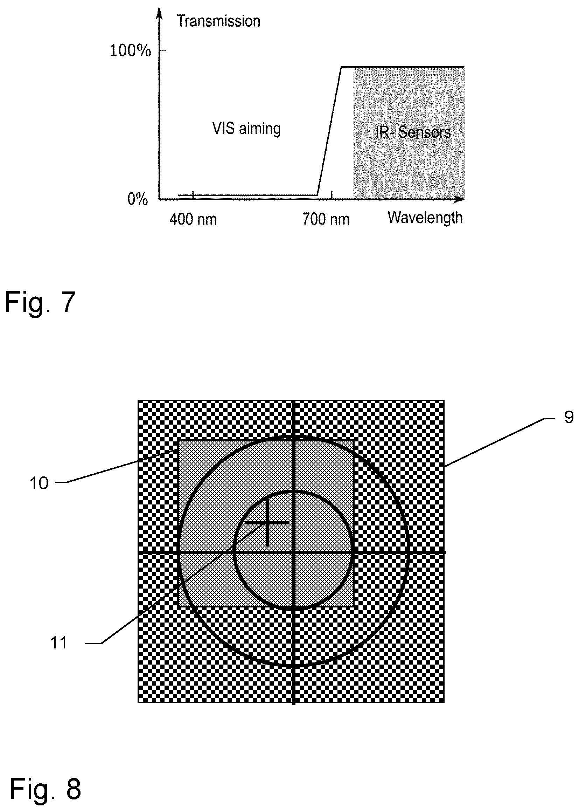

**Figure 7** shows a transmission spectrum of the element 8 attached to the retroreflective tape target 6 and being transmissive to IR radiation. In the visible wavelength range (about 400 nm to 780 nm), the transmission of element 8 is about 0 %. Consequently, light of this wavelength range is (almost) completely absorbed and accordingly not retroreflected. The element 8 appears opaque (black) to the eye and/or an optical aiming unit and thus enables aiming of the tape target 6. At wavelengths of about 680 nm and above, the transmission increases and reaches almost 100 % in the IR wavelength range (wavelength range greater than e.g. 700 nm). Accordingly, light in the IR wavelength range is (almost) not absorbed at all and is accordingly (almost) completely retroreflected.

**Figure 8** shows a situation in which the ATR-Field of View 10 is smaller than the retroreflective tape target 9.

When tape target 9 is very close to the ATR illuminator, it doesn't fit into the ATR-FOV 10. If then, as shown in this example, the ATR-FOV 10 is entirely on the tape target 9 (on the retroreflective area), then the reflected radiation beam is completely captured by the position-sensitive area of the ATR-sensor. Consequently, the ATR image data is fully illuminated (a transition from spot to non-illuminated ATR image data cannot be identified). Accordingly, the center of the fully illuminated ATR FOV 10 is determined as the false reflection center 11 of the tape target 9.

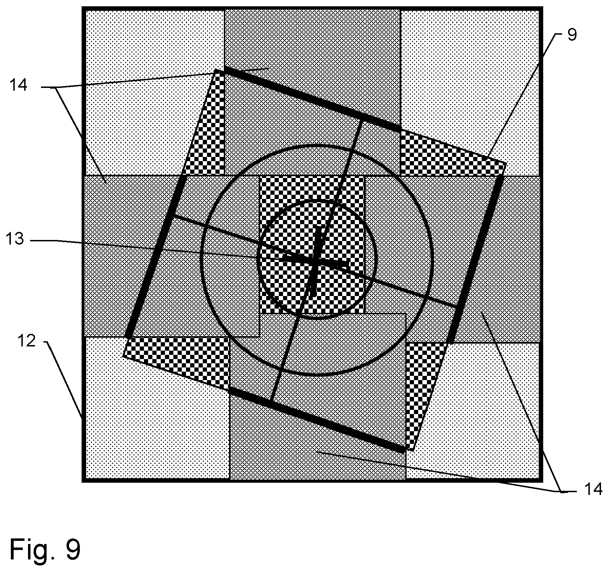

**Figure 9** shows a schematic illustration of the generation of a series of ATR image data and the determination of the reflection center of the retroreflective tape target. The geodetic surveying device performs a retroreflecting target measurement mode in which the retroreflective cooperative target 9 does not fit into the ATR-FOV 10. In the next step, a series of ATR image data 14 is generated.

In this example, only a part of the ATR FOV 10 for generating the series of ATR image data 14 overlaps with the target 9, so only this part is illuminated in the ATR image data 14 and a transition to the non-illuminated part can be determined. Due to this transition, a spatial analysis of illumination patterns can be performed with each of the ATR image data of the series of ATR image data 14.

With current total stations, the ATR camera is always focused to infinite distance, so the images are very blurry at close range and no sharp transitions are present. When using focused ATR cameras, sharp transitions could be determined.

Since the orientations of the ATR-illuminator are continuously recorded by the angle encoder and the processing unit also determines angular data depending on spot positions (illumination patterns) in the ATR image data, the expansion limits of the target 9 can be determined based on spatial analysis of illumination patterns. It does not matter whether the expansion limits are recorded completely or only partially. Once the expansion limits have been determined, it is very easy to calculate the size and position of the target 9 and thus also to determine the reflection center 13.

However, it is also possible to determine the reflection center 13 if fewer expansion limits of the target 9 have been determined. For example, one expansion limit can be determined and based on the known size of the target 9, it is then clear where the ATR unit (ATR-FOV 10) has to move to determine a second expansion limit. Based on these two known expansion limits and the known size of the target 9, the reflection center 13 can then be determined. It does not matter whether the target and/or the ATR-FOVs are rotated/twisted or parallel to the horizon.

In addition, the ATR image data of the series of ATR image data 14 can be stitched together by the retroreflecting target measurement mode (to a panoramic image), resulting in an enlarged ATR FOV 12, which completely captures the tape target 9. In this way, a spot (spot is then completely captured) is obtained in the panoramic image, based on which the reflection center 13 can also be determined.

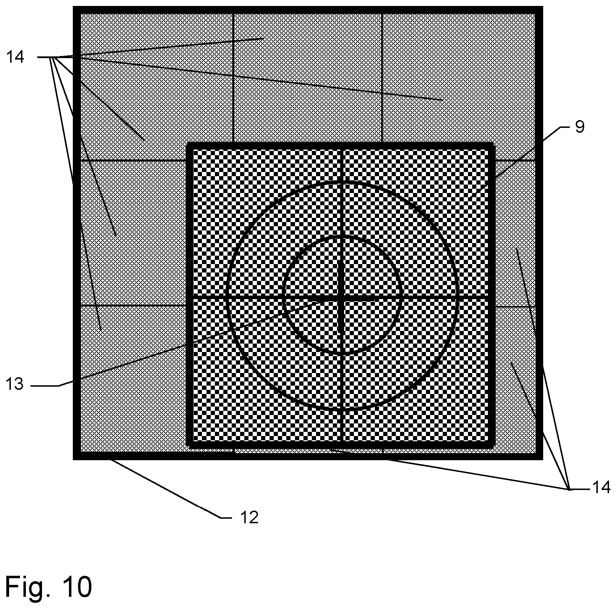

**Figure 10** shows a schematic illustration of the generation of further ATR image data of the series of ATR image data 14 with an altered orientation of the ATR-illuminator according to a 3x3 matrix recording pattern. In this exemplary embodiment, the retroreflective cooperative target 9 also does not fit within the ATR-FOV 10. However, the ATR-FOV 10 captures a portion of the first expansion limit of the target 9 (e.g. a first edge of the reflective tape), and therefore the retroreflective target measurement mode can use the spatial analysis of illumination patterns, called first spatial analysis, to determine this first expansion limit of the target 9.

However, in order to accurately determine (or calculate) the center of reflection 13 of the target 9, further ATR image data of the series of ATR image data 14 is generated until sufficient information (e.g. the position of a second or further expansion limit of the target 9, in particular a second or further edge of the tape) has been obtained regarding the target 9, wherein, for example, a second or further expansion limit of the target 9 is determined by the retroreflective target measuring mode using a second spatial analysis. To generate the further ATR image data of the ATR image data series 14, the orientation of the ATR-illuminator is changed according to an recording pattern. In this example, this recording pattern corresponds to a 3x3 matrix (i.e. different aiming positions on a grid), wherein the further ATR image data of the series of ATR image data 14 are stitched together by the retroreflecting target measurement mode (to a panoramic image), resulting in an enlarged ATR FOV 12, which completely captures the tape target 9. In this way, a spot (spot is then completely captured) is obtained in the panoramic image (e.g. which can be used to precisely compute the center of the tape with the traditional center of gravity approach), based on which the reflection center 13 can be determined (e.g. based on the first spatial analysis and second spatial analysis and taken different orientations of the ATR-illuminator). The size of the grid which needs to be traversed by the ATR-illuminator (e.g. by motor) and the positions, where the ATR images are taken, can be pre-calculated by taking the size of the ATR FoV, the target size, the minimum supported distance, the worst-case initial position, and the worst-case target rotation into account.

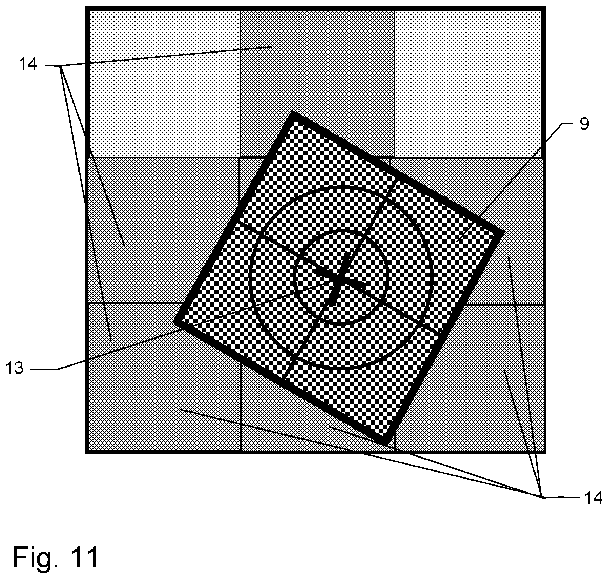

**Figure 11** shows a schematic illustration of the generation of further ATR image data of the series of ATR image data 14 according to a recording pattern, wherein parts of the recording pattern have been omitted since the complete target 9 has already been recorded. In this exemplary embodiment, further ATR image data of the series of ATR image data 14 with an altered orientation of the ATR-illuminator according to a 3x3 matrix recording pattern (in this case this would correspond to a total of nine ATR images) are generated as well. However, already after the capturing of seven ATR images the target 9 is completely covered, which is why the retroreflective target measurement mode does not continue the capturing of the two ATR images located in the corners of the 3x3 matrix recording pattern (covering the full pattern is only needed for the worst case).

In a further exemplary embodiment, an additional algorithm is implemented, which skips certain parts of the pattern when it detects that the border of the signal is already reached in that direction. As the shape of the target is known the geometrical center could also be calculated by only analysing the border of the signal. The goal is to detect enough geometrical features of the border (for the tape case corners and the edges) such that it is possible to calculate the center.

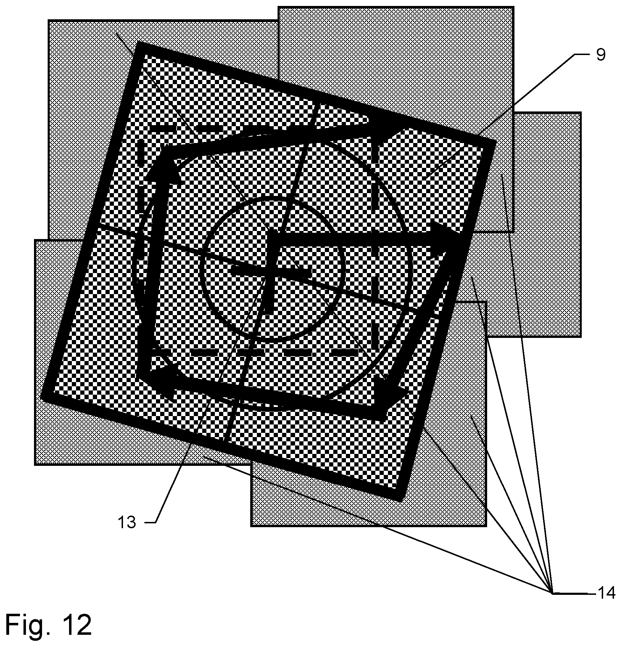

**Figure 12** shows a schematic illustration of the generation of further ATR image data of the series of ATR image data 14, wherein the recording pattern corresponds to a traversal of expansion limits in a certain direction. To capture the border (first expansion limit) of the target 9 (e.g. by first spatial analysis) it is not necessary to capture the full content of the observable signal/the complete target. The border (first expansion limit) can be captured by starting to move into a random direction until the border (first expansion limit) can be seen. Afterwards the ATR-illuminator simply follows the border (i.e. along the expansion limits) in one direction until it arrives at the start again. The geometric center can be calculated by fitting the shape of the target on the resulting panoramic image.

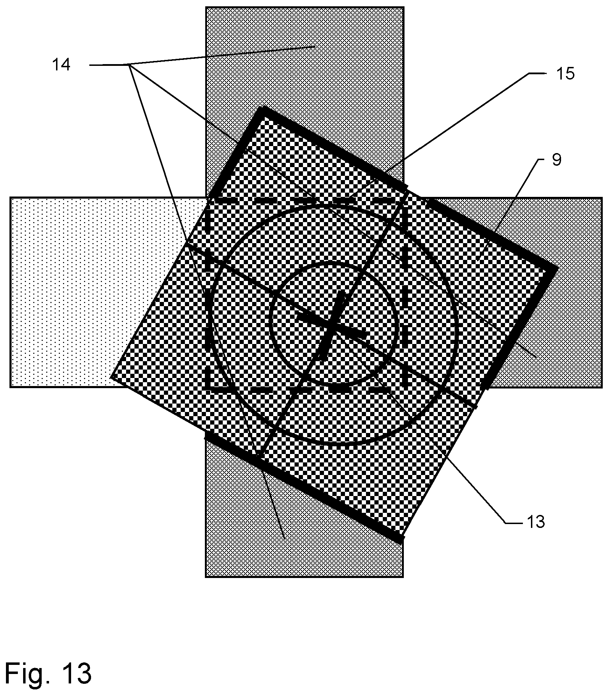

**Figure 13** shows a schematic illustration of the generation of further ATR image data of the series of ATR images 14, wherein all expansion limits of a reflective tape 9 can already be determined after the capturing of three ATR images. In this figure, the current aiming direction 15 of the ATR illuminator, and thus the ATR FOV 10, lies within the target 9, and therefore no expansion limits of the target 9 can be detected. In this exemplary embodiment of the invention, in order to be able to determine at least a first expansion limit by means of the first spatial analysis, further ATR image data of the series of ATR image data 14 is generated in accordance with a recording pattern, wherein the recording pattern is designed such, that ATR images are recorded at positions in four different directions (for example, up, down, left, right) around the current aiming direction 15 (thus, the recording pattern corresponds to an array of at least partially overlapping ATR image data, wherein the array of overlapping ATR image data forms a cross).

In this case, it is advantageous if each captured ATR image contains at least one of the expansion limits (border lines) which makes it possible to fit the shape of the target 9 onto it and enables the computation of the target center 13. In a further advantageous case, a corner (of the reflective tape 9) is visible in one of the ATR images. In this case, one other ATR image can be omitted (as shown in Figure 13) because the algorithm can detect two of the expansion limits (edges) at the corner (theoretically, detecting two corners or three edges would be sufficient to unambiguously determine the shape of the reflective tape 9).

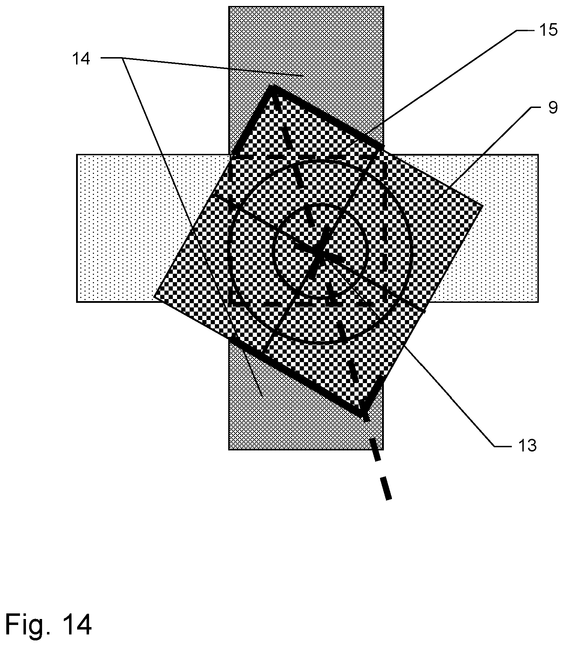

**Figure 14** shows a schematic illustration of the generation of further ATR image data of the series of ATR images 14, wherein based on a detected corner and the known geometry of the tape target 9, a further corner can be determined. In this exemplary embodiment, starting from the current aiming direction 15 of the ATR illuminator according to the recording pattern, another ATR image was captured adjacent to it and thus a corner of the tape target 9 was captured (whereby by means of the first spatial analysis the first expansion limit (and in this case of a captured corner also directly a second expansion limit) can be determined).

Based on the known expansion of the reflective tape 9, the ATR illuminator is oriented so that a second corner (in this case, as the third and fourth expansion limits) of the tape targets 9 is directly captured by a further ATR image of the series of ATR images 14. The option, which would theoretically require the least amount of ATR images (only one further ATR image above and one further ATR image below the current aming direction 15, ATR images left and right of the ATR image 15 are not necessary in this example), is to use an additional algorithm which adapts the positions at which the ATR images are captured using a heuristic which is based on extracting the information from the past ATR images.

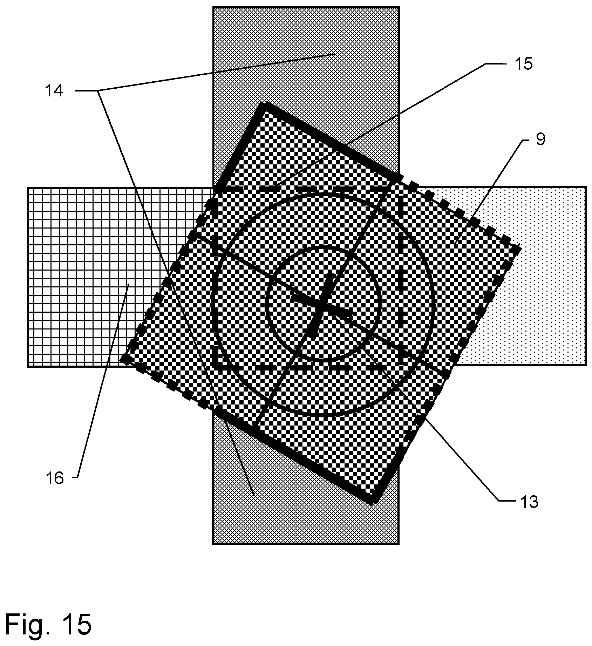

**Figure 15** shows a schematic illustration of the generation of further ATR image data of the series of ATR images 14, wherein an additional ATR image 16 is taken to improve the quality of the determination of the reflection center 13. By using the additional ATR image 16 (instead of using the information from the past ATR images to minimize the number of ATR images), an expansion limit is completely covered (maximized coverage of the edge), which both facilitates identification as an expansion limit using spatial analysis and improves the accuracy of the computed center 13.

A combination of the two embodiments (strategies) shown in Figure 14 and Figure 15 (minimum amount of ATR images and maximum accuracy), where a quality measure is computed from the currently available ATR images, can also be achieved. If necessary, the quality measure can be improved by adding additional ATR images.

Some quality measures are:
- average distance of the pixels, which were identified as part of the expansion limit (border), to fitted lines (can be improved by taking additional ATR images at different positions along the expansion limit (border),
- analyse geometric features of the fitted geometry (orthogonality, parallelism of edges or distances of corners) (can be improved by taking additional ATR images at the position where the previously unseen corners are estimated to be located),
- based on the already available ATR images a rough estimate about how much of the whole area of the spot (or its border) has already been covered can be calculated (can be improved by adding more ATR images until a certain threshold is reached).

The benefits of such a combination of embodiments are that short range tapes are accurately measurable and that the time for measuring with the required precision is minimized.

Although the inventions are illustrated above, partly with reference to some preferred embodiments, it must be understood that numerous modifications and combinations of different features of the embodiments can be made.

## Claims

1. Geodetic surveying device, in particular total station or theodolite, wherein the geodetic surveying device is configured for surveying retroreflective cooperative targets, in particular reflective tapes, the geodetic surveying device comprising:
• a base,
• a telescope, wherein the telescope is configured for carrying out a distance measurement by means of a laser beam emitted via a beam exit of the telescope,
• a support, wherein the support is attached to the base so as to be rotatable about a vertical axis of rotation and the telescope is attached to two opposing leg components of the support so as to be rotatable about a horizontal axis of rotation,
• a target recognition emitting unit, called ATR-illuminator, configured to emit a radiation beam, in particular in a beam divergence of 0.5° to 5°,
• a target recognition sensor, called ATR-sensor,
∘ having a position-sensitive area for receiving radiation of the radiation beam reflected at the retroreflective cooperative targets for generating ATR image data, wherein the received radiation appear as spots in the ATR image data,
• at least one angle encoder, wherein the at least one angle encoder is configured to determine orientations of the telescope and/or the support and/or the ATR-illuminator relative to the base,
• a processing unit configured to determine angular data depending on spot positions in the image data,
**characterized in that**
the geodetic surveying device is configured to
• generate a series of ATR image data with continuously changing orientation of the ATR-illuminator and/or the ATR-sensor, wherein image data of the series of ATR image data are generated with different ATR illumination, in particular with alternating ATR illumination on and off,
• generate difference image data and perform spatial stitching of the difference image data such that panoramic difference image data are generated, and
• determine the position of the spots, especially the centroid of the area, in the panoramic difference image data.

2. Geodetic surveying device according to claim 1, wherein for the generation of the series of ATR image data, the orientation of the ATR-illuminator is changed by rotating the support around the vertical axis of rotation and/or around the horizontal axis of rotation, in particular wherein individual image data of the series of ATR image data are generated at least every 1°, more particularly at least every 0.5°.

3. Geodetic surveying device according to claim 1, wherein the generation of the image data of the series of ATR image data with different ATR illumination, in particular with alternating ATR illumination on and off, results in image data with a plurality of spots, called bright image data, when the ATR illumination is on, and in image data with a small number of spots, called dark image data, when the ATR illumination is off, wherein the geodetic surveying device is configured to
• perform spatial stitching of the bright image data to bright panoramic image data and spatial stitching of the dark image data to dark panoramic image data,
• generate panoramic difference image data using the bright panoramic image data and the dark panoramic image data, and
• determine the position of the spots, especially the centroid of the area, in the panoramic difference image data.

4. Geodetic surveying device according to claim 1, wherein the geodetic surveying device is configured to
• firstly generate the difference image data using the image data of the series of ATR image data generated with different ATR illumination, and
• secondly perform the spatial stitching of the difference image data to the panoramic difference image data.

5. Geodetic surveying device according to one of the claims 1 to 4 and retroreflective tape target (6), the retroreflective tape target to be surveyed by the geodetic surveying device, the retroreflective tape target (6) comprising
• an area (7) where impinging light of a first wavelength range is retroreflected, and
• an element (8) arranged within the retroreflective area (7), wherein the element (8)
∘ is transmissive to radiation of the first wavelength range, and
∘ is opaque to radiation of a second wavelength range, wherein the second wavelength range is at least partly in a visible wavelength range.

6. Geodetic surveying device and retroreflective tape target (6) according to claim 5, wherein the first wavelength range is in the non-visible wavelength range,
in particular wherein
the first wavelength range is in the wavelength range greater than 700 nm, in particular in the infrared wavelength range, or
the first wavelength range is in the wavelength range smaller than 400 nm, in particular in the UV wavelength range.

7. Geodetic surveying device and retroreflective tape target (6) according to claim 5, wherein the element (8) is configured as a pattern, in particular as a pattern for being targeted with an optical targeting unit, wherein the pattern subdivides the retroreflective area (7) into sectors,
in particular wherein
the pattern comprises a horizontal line, a vertical line and at least one circle, wherein the horizontal and the vertical line intersect in the center of the retroreflective area, in particular wherein the pattern is formed as reticle, and/or
the element (8) is applied to the retroreflective area (7), in particular printed on, and/or
the retroreflective area (7) comprises micro-prismatic reflectors as micro-beads and/or corner cube arrays.

8. Geodetic surveying device according to one of the claims 1 to 4, wherein the ATR-sensor defining a field-of-view corresponding to the beam divergence, called ATR-FOV (10),
**characterized in that**
the geodetic surveying device is configured for performing a retroreflecting target measurement mode in which the retroreflective cooperative target (9) does not fit into the ATR-FOV (10), in which a series of ATR image data (14) is generated, wherein with each of the ATR image data of the series of ATR image data (14) a spatial analysis of illumination patterns is carried out, wherein based on the spatial analysis of illumination patterns and taken different orientations of the ATR-illuminator, i.e. angles determined by the at least one angle encoder in each of the different orientations of the ATR-illuminator, a reflection center (13) of the retroreflective cooperative target (9) is determined.

9. Geodetic surveying device according to claim 8, wherein the geodetic surveying device is configured to
• generate image data of the series of ATR image data with different ATR illumination, in particular with alternating ATR illumination on and off, and
• generate difference image data using the image data of the series of ATR image data generated with different ATR illumination,
wherein the spatial analysis of illumination patterns is carried out with the difference image data.

10. Geodetic surveying device according to claim 8 or claim 9, wherein the retroreflecting target measurement mode is performed for retroreflective cooperative targets located within a defined threshold distance, in particular wherein the defined threshold distance is within a range of 0.5 m to 25 m, in particular 1.5 m to 15 m, from the ATR-illuminator.

11. Geodetic surveying device according to any one of claims 8 to 10, wherein ATR image data of the series of ATR image data (14) is generated until the retroreflecting target measurement mode determines at least a part of a first expansion limit of the retroreflective cooperative target, in particular a first edge of a reflective tape, by means of the spatial analysis of illumination patterns, called first spatial analysis.

12. Geodetic surveying device according to claim 11, wherein based on the determination of at least a part of the first expansion limit of the retroreflective cooperative target, in particular the first edge of the reflective tape, by means of the first spatial analysis and the corresponding orientation of the ATR-illuminator, further ATR image data of the series of ATR image data (14) is generated, wherein for generating the further ATR image data of the series of ATR image data (14) the orientation of the ATR-illuminator is altered according to a recording pattern, in particular wherein
• the further ATR image data of the series of ATR image data (14) are generated until the retroreflective target measuring mode determines at least a part of at least a second expansion limit of the retroreflective cooperative target, in particular at least a second edge of a reflective tape, by means of a second spatial analysis, and
• based on the first spatial analysis and second spatial analysis and taken different orientations of the ATR-illuminator, the reflection center of the reflective target is determined.

13. **Geodetic** surveying device according to claim 12, wherein the recording pattern corresponds to
• a traversal of expansion limits in a certain direction starting from the determined at least a part of the first expansion limit of the retroreflective cooperative target, in particular the first edge of the reflective tape, to a re-arrival of the determined at least a part of the first expansion limit of the retroreflective cooperative target, in particular the first edge of the reflective tape, or
• an array of adjacent or overlapping **ATR** image data, wherein the array of adjacent or overlapping **ATR** image data forms
∘ a row,
∘ a matrix, in particular a 3x3 matrix, or
∘ a cross.

14. Geodetic surveying device according to claim 12, wherein the geodetic surveying device is configured to determine at least the second expansion limit based on the known expansion of the retroreflective cooperative target, in particular based on the known expansion of the reflective tape, wherein the ATR-illuminator is oriented such that at least the second expansion limit is directly captured by the further ATR-image data of the series of ATR-image data (14).

15. Geodetic surveying device according to any one of claims 9 to 14, wherein if the retroreflecting target measurement mode determines only a part of an expansion limit, in particular of the first and/or second expansion limit, by means of the spatial analysis of illumination patterns, the complete expansion as well as the orientation in space of the expansion limit is determined based on the known expansion of the retroreflective cooperative target, in particular from the known expansion of the reflective tape.

## Patentansprüche

1. Geodätisches Vermessungsgerät, insbesondere Totalstation oder Theodolit, wobei das geodätische Vermessungsgerät zum Vermessen retroreflektierender kooperativer Ziele, insbesondere reflektierender Bänder, eingerichtet ist, wobei das geodätische Vermessungsgerät umfasst:
• eine Basis,
• ein Fernrohr, wobei das Fernrohr dazu eingerichtet ist, mittels eines über einen Strahlaustritt des Fernrohrs ausgesendeten Laserstrahls eine Entfernungsmessung durchzuführen,
• einen Träger, wobei der Träger an der Basis derart angebracht ist, dass er um eine vertikale Drehachse drehbar ist, und das Fernrohr an zwei gegenüberliegenden Schenkeln des Trägers derart angebracht ist, dass es um eine horizontale Drehachse drehbar ist,
• eine Zielerkennungs-Sendeeinheit, als ATR-Beleuchter bezeichnet, die dazu eingerichtet ist, ein Strahlungsbündel, insbesondere mit einer Strahldivergenz von 0,5° bis 5°, auszusenden,
• einen Zielerkennungssensor, als ATR-Sensor bezeichnet,
∘ der eine positionsempfindliche Fläche zum Empfangen von an den retroreflektierenden kooperativen Zielen reflektierter Strahlung des Strahlungsbündels aufweist, um ATR-Bilddaten zu erzeugen, wobei die empfangene Strahlung als Bildflecken in den ATR-Bilddaten erscheint,
• mindestens einen Winkelencoder, wobei der mindestens eine Winkelencoder dazu eingerichtet ist, Ausrichtungen des Fernrohrs und/oder des Trägers und/oder des ATR-Beleuchters relativ zur Basis zu bestimmen, und
• eine Verarbeitungseinheit, die dazu eingerichtet ist, Winkeldaten in Abhängigkeit von Bildfleckpositionen in den Bilddaten zu bestimmen,
**dadurch gekennzeichnet, dass**
das geodätische Vermessungsgerät dazu eingerichtet ist,
• eine Folge von ATR-Bilddaten bei kontinuierlich veränderter Ausrichtung des ATR-Beleuchters und/oder des ATR-Sensors zu erzeugen, wobei Bilddaten der Folge von ATR-Bilddaten mit unterschiedlicher ATR-Beleuchtung, insbesondere mit abwechselnd ein- und ausgeschalteter ATR-Beleuchtung, erzeugt werden,
• Differenzbilddaten zu erzeugen und eine räumliche Zusammenfügung der Differenzbilddaten derart durchzuführen, dass panoramische Differenzbilddaten erzeugt werden, und
• die Position der Bildflecken, insbesondere den Schwerpunkt der Fläche, in den panoramischen Differenzbilddaten zu bestimmen.

2. Geodätisches Vermessungsgerät nach Anspruch 1, wobei bei der Erzeugung der Folge von ATR-Bilddaten die Ausrichtung des ATR-Beleuchters durch Drehen des Trägers um die vertikale Drehachse und/oder um die horizontale Drehachse geändert wird, insbesondere wobei einzelne Bilddaten der Folge von ATR-Bilddaten mindestens alle 1°, insbesondere mindestens alle 0,5°, erzeugt werden.

3. Geodätisches Vermessungsgerät nach Anspruch 1, wobei die Erzeugung der Bilddaten der Folge von ATR-Bilddaten mit unterschiedlicher ATR-Beleuchtung, insbesondere mit abwechselnd ein- und ausgeschalteter ATR-Beleuchtung, zu Bilddaten mit einer Vielzahl von Bildflecken, als Hellbilddaten bezeichnet, wenn die ATR-Beleuchtung eingeschaltet ist, und zu Bilddaten mit einer geringen Anzahl von Bildflecken, als Dunkelbilddaten bezeichnet, wenn die ATR-Beleuchtung ausgeschaltet ist, führt, wobei das geodätische Vermessungsgerät dazu eingerichtet ist,
• eine räumliche Zusammenfügung der Hellbilddaten zu hellen panoramischen Bilddaten und eine räumliche Zusammenfügung der Dunkelbilddaten zu dunklen panoramischen Bilddaten durchzuführen,
• panoramische Differenzbilddaten unter Verwendung der hellen panoramischen Bilddaten und der dunklen panoramischen Bilddaten zu erzeugen, und
• die Position der Bildflecken, insbesondere den Schwerpunkt der Fläche, in den panoramischen Differenzbilddaten zu bestimmen.

4. Geodätisches Vermessungsgerät nach Anspruch 1, wobei das geodätische Vermessungsgerät dazu eingerichtet ist,
• zuerst die Differenzbilddaten unter Verwendung der Bilddaten der Folge von ATR-Bilddaten mit unterschiedlicher ATR-Beleuchtung zu erzeugen und
• anschliessend die räumliche Zusammenfügung der Differenzbilddaten zu den panoramischen Differenzbilddaten durchzuführen.

5. Geodätisches Vermessungsgerät nach einem der Ansprüche 1 bis 4 und retroreflektierendes Bandziel (6), wobei das retroreflektierende Bandziel (6) durch das geodätische Vermessungsgerät vermessen werden soll, wobei das retroreflektierende Bandziel (6) umfasst:
• eine Fläche (7), an der einfallendes Licht eines ersten Wellenlängenbereichs retroreflektiert wird, und
• ein innerhalb der retroreflektierenden Fläche (7) angeordnetes Element (8), wobei das Element (8)
∘ für Strahlung des ersten Wellenlängenbereichs durchlässig ist und
∘ für Strahlung eines zweiten Wellenlängenbereichs undurchlässig ist, wobei der zweite Wellenlängenbereich zumindest teilweise in einem sichtbaren Wellenlängenbereich liegt.

6. Geodätisches Vermessungsgerät und retroreflektierendes Bandziel (6) nach Anspruch 5, wobei der erste Wellenlängenbereich im nicht sichtbaren Wellenlängenbereich liegt, insbesondere wobei
• der erste Wellenlängenbereich in einem Wellenlängenbereich oberhalb von 700 nm, insbesondere im Infrarotwellenlängenbereich, liegt, oder
• der erste Wellenlängenbereich in einem Wellenlängenbereich unterhalb von 400 nm, insbesondere im UV-Wellenlängenbereich, liegt.

7. Geodätisches Vermessungsgerät und retroreflektierendes Bandziel (6) nach Anspruch 5, wobei das Element (8) als Muster ausgebildet ist, insbesondere als Muster zum Anvisieren mit einer optischen Anzieleinheit, wobei das Muster die retroreflektierende Fläche (7) in Sektoren unterteilt, insbesondere wobei
• das Muster eine horizontale Linie, eine vertikale Linie und mindestens einen Kreis umfasst, wobei sich die horizontale und die vertikale Linie im Zentrum der retroreflektierenden Fläche schneiden, insbesondere wobei das Muster als Fadenkreuz ausgebildet ist, und/oder
• das Element (8) auf die retroreflektierende Fläche (7) aufgebracht, insbesondere aufgedruckt, ist, und/oder
• die retroreflektierende Fläche (7) mikroprismatische Reflektoren als Mikroperlen und/oder Tripelspiegelanordnungen umfasst.

8. Geodätisches Vermessungsgerät nach einem der Ansprüche 1 bis 4, wobei der ATR-Sensor ein der Strahldivergenz entsprechendes Sichtfeld definiert, als ATR-Sichtfeld (10) bezeichnet,
**dadurch gekennzeichnet, dass**
das geodätische Vermessungsgerät dazu eingerichtet ist, einen Messmodus für retroreflektierende Ziele durchzuführen, bei dem das retroreflektierende kooperative Ziel (9) nicht in das ATR-Sichtfeld (10) passt, in dem eine Folge von ATR-Bilddaten (14) erzeugt wird, wobei in jedem der ATR-Bilddaten der Folge von ATR-Bilddaten (14) eine räumliche Analyse von Beleuchtungsmustern durchgeführt wird, wobei auf Grundlage der räumlichen Analyse von Beleuchtungsmustern und unter Berücksichtigung unterschiedlicher Ausrichtungen des ATR-Beleuchters, d. h. von Winkeln, die durch den mindestens einen Winkelencoder bei jeder der unterschiedlichen Ausrichtungen des ATR-Beleuchters bestimmt werden, ein Reflexionszentrum (13) des retroreflektierenden kooperativen Ziels (9) bestimmt wird.

9. Geodätisches Vermessungsgerät nach Anspruch 8, wobei das geodätische Vermessungsgerät dazu eingerichtet ist,
• Bilddaten der Folge von ATR-Bilddaten mit unterschiedlicher ATR-Beleuchtung, insbesondere mit abwechselnd ein- und ausgeschalteter ATR-Beleuchtung, zu erzeugen und
• Differenzbilddaten unter Verwendung der Bilddaten der Folge von ATR-Bilddaten zu erzeugen, die mit unterschiedlicher ATR-Beleuchtung erzeugt wurden,
wobei die räumliche Analyse von Beleuchtungsmustern mit den Differenzbilddaten durchgeführt wird.

10. Geodätisches Vermessungsgerät nach Anspruch 8 oder Anspruch 9, wobei der Messmodus für retroreflektierende Ziele für retroreflektierende kooperative Ziele durchgeführt wird, die sich innerhalb eines definierten Schwellenabstands vom ATR-Beleuchter befinden, insbesondere wobei der definierte Schwellenabstand in einem Bereich von 0,5 m bis 25 m, insbesondere 1,5 m bis 15 m, liegt.

11. Geodätisches Vermessungsgerät nach einem der Ansprüche 8 bis 10, wobei ATR-Bilddaten der Folge von ATR-Bilddaten (14) erzeugt werden, bis der Messmodus für retroreflektierende Ziele mittels der räumlichen Analyse von Beleuchtungsmustern zumindest einen Teil einer ersten Ausdehnungsgrenze des retroreflektierenden kooperativen Ziels, insbesondere eine erste Kante eines reflektierenden Bandes, bestimmt, als erste räumliche Analyse bezeichnet.

12. Geodätisches Vermessungsgerät nach Anspruch 11, wobei auf Grundlage der Bestimmung zumindest eines Teils der ersten Ausdehnungsgrenze des retroreflektierenden kooperativen Ziels, insbesondere der ersten Kante des reflektierenden Bandes, mittels der ersten räumlichen Analyse und der entsprechenden Ausrichtung des ATR-Beleuchters weitere ATR-Bilddaten der Folge von ATR-Bilddaten (14) erzeugt werden, wobei bei der Erzeugung der weiteren ATR-Bilddaten der Folge von ATR-Bilddaten (14) die Ausrichtung des ATR-Beleuchters gemäss einem Aufzeichnungsmuster geändert wird, insbesondere wobei
• die weiteren ATR-Bilddaten der Folge von ATR-Bilddaten (14) erzeugt werden, bis der Messmodus für retroreflektierende Ziele mittels einer zweiten räumlichen Analyse zumindest einen Teil zumindest einer zweiten Ausdehnungsgrenze des retroreflektierenden kooperativen Ziels, insbesondere zumindest eine zweite Kante eines reflektierenden Bandes, bestimmt, und
• auf Grundlage der ersten räumlichen Analyse und der zweiten räumlichen Analyse und unter Berücksichtigung unterschiedlicher Ausrichtungen des ATR-Beleuchters das Reflexionszentrum des reflektierenden Ziels bestimmt wird.

13. Geodätisches Vermessungsgerät nach Anspruch 12, wobei das Aufzeichnungsmuster Folgendem entspricht:
• einem Abfahren von Ausdehnungsgrenzen in einer bestimmten Richtung, ausgehend von dem bestimmten zumindest einen Teil der ersten Ausdehnungsgrenze des retroreflektierenden kooperativen Ziels, insbesondere der ersten Kante des reflektierenden Bandes, bis zu einem erneuten Erreichen des bestimmten zumindest einen Teils der ersten Ausdehnungsgrenze des retroreflektierenden kooperativen Ziels, insbesondere der ersten Kante des reflektierenden Bandes, oder
• einer Anordnung benachbarter oder überlappender ATR-Bilddaten, wobei die Anordnung benachbarter oder überlappender ATR-Bilddaten
∘ eine Reihe,
∘ eine Matrix, insbesondere eine 3×3-Matrix, oder
∘ ein Kreuz bildet.

14. Geodätisches Vermessungsgerät nach Anspruch 12, wobei das geodätische Vermessungsgerät dazu eingerichtet ist, zumindest die zweite Ausdehnungsgrenze auf Grundlage der bekannten Ausdehnung des retroreflektierenden kooperativen Ziels, insbesondere auf Grundlage der bekannten Ausdehnung des reflektierenden Bandes, zu bestimmen, wobei der ATR-Beleuchter derart ausgerichtet wird, dass zumindest die zweite Ausdehnungsgrenze direkt durch die weiteren ATR-Bilddaten der Folge von ATR-Bilddaten (14) erfasst wird.

15. Geodätisches Vermessungsgerät nach einem der Ansprüche 9 bis 14, wobei dann, wenn der Messmodus für retroreflektierende Ziele mittels der räumlichen Analyse von Beleuchtungsmustern nur einen Teil einer Ausdehnungsgrenze, insbesondere der ersten und/oder zweiten Ausdehnungsgrenze, bestimmt, die vollständige Ausdehnung sowie die Ausrichtung der Ausdehnungsgrenze im Raum auf Grundlage der bekannten Ausdehnung des retroreflektierenden kooperativen Ziels, insbesondere der bekannten Ausdehnung des reflektierenden Bandes, bestimmt werden.

## Revendications

1. Dispositif de levé géodésique, en particulier station totale ou théodolite, dans lequel ledit dispositif de levé géodésique est configuré pour effectuer des levés sur des cibles coopératives rétroréfléchissantes, en particulier des bandes réfléchissantes, ledit dispositif de levé géodésique comprenant :
• une base,
• un télescope, le télescope étant configuré pour effectuer une mesure de distance au moyen d'un faisceau laser émis via une sortie de faisceau du télescope,
• un support, le support étant fixé à la base de manière à pouvoir tourner autour d'un axe de rotation vertical et le télescope étant fixé à deux composants de jambe opposés du support de manière à pouvoir tourner autour d'un axe de rotation horizontal,
• une unité d'émission de reconnaissance de cibles, appelée illuminateur ATR, configurée pour émettre un faisceau de rayonnement, en particulier avec une divergence de faisceau de 0,5° à 5°,
• un capteur de reconnaissance de cibles, appelé capteur ATR,
∘ comportant une zone sensible à la position destinée à recevoir le rayonnement du faisceau de rayonnement réfléchi par les cibles coopératives rétroréfléchissantes afin de générer des données d'image ATR, le rayonnement reçu apparaissant sous la forme de points dans les données d'image ATR,
• au moins un codeur d'angle, ledit au moins un codeur d'angle étant configuré pour déterminer les orientations du télescope et/ou du support et/ou de l'illuminateur ATR par rapport à la base,
• une unité de traitement configurée pour déterminer des données angulaires en fonction des positions des points dans les données d'image,
**caractérisé en ce que**
le dispositif de levé géodésique est configuré pour
• générer une série de données d'image ATR avec une orientation variant de façon continue de l'illuminateur ATR et/ou du capteur ATR, les données d'image de la série de données d'image ATR étant générées avec différentes illumination ATR, en particulier avec un allumage et une extinction alternés de l'illumination ATR,
• générer des données d'image de différence et effectuer un assemblage spatial de ces données de manière à générer des données d'image de différence panoramique, et
• déterminer la position des points, en particulier le centroïde de la zone, dans les données d'image de différence panoramique.

2. Dispositif de levé géodésique selon la revendication 1, dans lequel, pour la génération de la série de données d'image ATR, l'orientation de l'illuminateur ATR est modifiée en faisant tourner le support autour de l'axe de rotation vertical et/ou autour de l'axe de rotation horizontal, en particulier dans lequel des données d'image individuelles de la série de données d'image ATR sont générées au moins tous les 1°, plus particulièrement au moins tous les 0,5°.

3. Dispositif de levé géodésique selon la revendication 1, dans lequel la génération des données d'image de la série de données d'image ATR avec différentes illuminations ATR, en particulier avec un allumage et une extinction alternés de l'illumination ATR, a pour résultats des données d'image comportant une pluralité de points, appelées données d'image claire, lorsque l'illumination ATR est activé, et des données d'image comportant un petit nombre de points, appelées données d'image sombre, lorsque l'illumination ATR est désactivée, le dispositif de levé géodésique étant configuré pour
• effectuer un assemblage spatial des données d'image claire en données d'image panoramique claire et un assemblage spatial des données d'image sombre en données d'image panoramique sombre,
• générer des données d'image panoramique de différence à partir des données d'images panoramique claire et des données d'image panoramique sombre, et
• déterminer la position des points, en particulier du centroïde de la zone, dans les données d'image de différence panoramique.

4. Dispositif de levé géodésique selon la revendication 1, dans lequel le dispositif de levé géodésique est configuré pour
• générer dans un premier temps les données d'image de différence à partir des données d'image de la série de données d'image ATR générées avec différentes illuminations ATR, et
• effectuer dans un second temps l'assemblage spatial des données d'image de différence pour obtenir les données d'image de différence panoramique.

5. Dispositif de levé géodésique selon l'une des revendications 1 à 4 et cible à bande rétroréfléchissante (6), la cible à bande rétroréfléchissante devant être levée par le dispositif de levé géodésique, la cible à bande rétroréfléchissante (6) comprenant
• une zone (7) où la lumière incidente d'une première gamme de longueurs d'onde est rétroréfléchie, et
• un élément (8) disposé à l'intérieur de la zone rétroréfléchissante (7), l'élément (8)
∘ étant transmissif au rayonnement de la première gamme de longueurs d'onde, et
∘ étant opaque au rayonnement d'une deuxième gamme de longueurs d'onde, la deuxième gamme de longueurs d'onde se situant au moins en partie dans une gamme de longueurs d'onde visibles.

6. Dispositif de levé géodésique et cible à bande rétroréfléchissante (6) selon la revendication 5, dans lequel la première gamme de longueurs d'onde se situe dans la gamme des longueurs d'onde non visibles,
en particulier dans lequel
la première gamme de longueurs d'onde se situe dans la gamme des longueurs d'onde supérieures à 700 nm, en particulier dans la gamme des longueurs d'onde infrarouges, ou
la première gamme de longueurs d'onde se situe dans la gamme des longueurs d'onde inférieures à 400 nm, en particulier dans la gamme des longueurs d'onde UV.

7. Dispositif de levé géodésique et cible à bande rétroréfléchissante (6) selon la revendication 5, dans lequel l'élément (8) est configuré sous la forme d'un motif, en particulier d'un motif destiné à être visé par une unité de visée optique, le motif subdivisant la zone rétroréfléchissante (7) en secteurs, en particulier dans lequel
le motif comprend une ligne horizontale, une ligne verticale et au moins un cercle, les lignes horizontale et verticale se coupant au centre de la zone rétroréfléchissante, en particulier le motif étant réalisé sous la forme d'un réticule, et/ou
l'élément (8) est appliqué sur la zone rétroréfléchissante (7), en particulier imprimé sur celle-ci, et/ou
la zone rétroréfléchissante (7) comprend des réflecteurs microprismatiques sous la forme de microbilles et/ou de réseaux de coins de cube.

8. Dispositif de levé géodésique selon l'une des revendications 1 à 4, dans lequel le capteur ATR définit un champ de vision correspondant à la divergence de faisceau, appelé ATR-FOV (10),
**caractérisé en ce que**
le dispositif de levé géodésique est configuré pour exécuter un mode de mesure de cible rétroréfléchissante dans lequel la cible rétroréfléchissante coopérative (9) ne tient pas dans l'ATR-FOV (10), dans lequel une série de données d'image ATR (14) est générée, dans lequel, pour chacune des données d'image ATR de la série de données d'image ATR (14), une analyse spatiale des motifs d'illumination est effectuée, dans lequel, sur la base de l'analyse spatiale des motifs d'illumination et des différentes orientations de l'illuminateur ATR, c'est-à-dire des angles déterminés par ledit au moins un codeur d'angle dans chacune des différentes orientations de l'illuminateur ATR, un centre de réflexion (13) de la cible coopérative rétroréfléchissante (9) est déterminé.

9. Dispositif de levé géodésique selon la revendication 8, dans lequel le dispositif de levé géodésique est configuré pour
• générer des données d'image de la série de données d'image ATR avec différentes illuminations ATR, en particulier avec un allumage et une extinction alternés de l'illumination ATR, et
• générer des données d'image de différence à partir des données d'image de la série de données d'image ATR générées avec différentes illuminations ATR,
dans lequel l'analyse spatiale des motifs d'illumination est effectuée à partir des données d'image de différence.

10. Dispositif de levé géodésique selon la revendication 8 ou la revendication 9, dans lequel le mode de mesure de cible rétroréfléchissante est mis en œuvre pour des cibles coopératives rétroréfléchissantes situées à une distance seuil définie, en particulier dans lequel la distance seuil définie se situe dans une plage de 0,5 m à 25 m, en particulier de 1,5 m à 15 m, par rapport à l'illuminateur ATR.

11. Dispositif de levé géodésique selon l'une quelconque des revendications 8 à 10, dans lequel des données d'image ATR de la série de données d'image ATR (14) sont générées jusqu'à ce que le mode de mesure de cible rétroréfléchissante détermine au moins une partie d'une première limite d'extension de la cible rétroréfléchissante coopérative, en particulier un premier bord d'une bande réfléchissante, au moyen de l'analyse spatiale des motifs d'illumination, appelée première analyse spatiale.

12. Dispositif de levé géodésique selon la revendication 11, dans lequel, sur la base de la détermination d'au moins une partie de la première limite d'extension de la cible coopérative rétroréfléchissante, en particulier le premier bord de la bande réfléchissante, au moyen de la première analyse spatiale et de l'orientation correspondante de l'illuminateur ATR, d'autres données d'image ATR de la série de données d'image ATR (14) sont générées, dans lequel, pour générer les autres données d'image ATR de la série de données d'image ATR (14), l'orientation de l'illuminateur ATR est modifiée selon un schéma d'enregistrement, en particulier dans lequel
• les autres données d'image ATR de la série de données d'image ATR (14) sont générées jusqu'à ce que le mode de mesure de cible rétroréfléchissante détermine au moins une partie d'au moins une deuxième limite d'extension de la cible rétroréfléchissante coopérative, en particulier au moins un deuxième bord d'une bande réfléchissante, au moyen d'une deuxième analyse spatiale, et
• sur la base de la première analyse spatiale et de la deuxième analyse spatiale, et des différentes orientations prises par l'illuminateur ATR, le centre de réflexion de la cible réfléchissante est déterminé.

13. Dispositif de levé géodésique selon la revendication 12, dans lequel le schéma d'enregistrement correspond à
• un parcours des limites d'extension dans une certaine direction, en partant de ladite au moins une partie déterminée de la première limite d'extension de la cible rétroréfléchissante coopérative, en particulier le premier bord de la bande réfléchissante, jusqu'à un retour à ladite au moins une partie déterminée de la première limite d'extension de la cible rétroréfléchissante coopérative, en particulier le premier bord de la bande réfléchissante, ou
• un réseau de données d'image ATR adjacentes ou se chevauchant, dans lequel le réseau de données d'image ATR adjacentes ou se chevauchant forme
∘ une ligne,
∘ une matrice, en particulier une matrice 3x3, ou
∘ une croix.

14. Dispositif de levé géodésique selon la revendication 12, dans lequel le dispositif de levé géodésique est configuré pour déterminer au moins la deuxième limite d'extension sur la base de l'extension connue de la cible coopérative rétroréfléchissante, en particulier sur la base de l'extension connue de la bande réfléchissante, dans lequel l'illuminateur ATR est orienté de telle sorte qu'au moins la deuxième limite d'extension soit directement capturée par les autres données d'image ATR de la série de données d'image ATR (14).

15. Dispositif de levé géodésique selon l'une quelconque des revendications 9 à 14, dans lequel, si le mode de mesure de cible rétroréfléchissante ne détermine qu'une partie d'une limite d'extension, en particulier de la première et/ou de la deuxième limite d'extension, au moyen de l'analyse spatiale des motifs d'illumination, l'extension complète ainsi que l'orientation dans l'espace de la limite d'extension sont déterminées sur la base de l'extension connue de la cible coopérative rétroréfléchissante, en particulier à partir de l'extension connue de la bande réfléchissante.
